# FASCICULE DE BREVET EUROPEEN

(11) **EP 1 927 426 B1**
(45) Date de publication et mention de la délivrance du brevet: **28.04.2010**
(21) Numéro de dépôt: 07121549.5
(22) Date de dépôt: 26.11.2007
(51) Int. Cl.: B23K 26/16, B23K 26/38, B23K 26/06

(54) **Procédé de perçage laser d'une pièce en matériau composite à matrice céramique**
Verfahren zum Laserbohren eines Werkstücks aus einem Verbundwerkstoff mit einer keramischen Matrix
Process of laser drilling a ceramic matrix composite material workpiece

(30) Priorité: 30.11.2006 FR 0655240
(43) Date de publication de la demande: 04.06.2008
(73) Titulaire: SNECMA, 75015 Paris (FR)
(72) Inventeur: Le Clere, Philippe, 77240, VERT ST DENIS (FR)
(74) Mandataire: David, Daniel

(56) Documents cités:
- EP-A- 0 826 457
- US-A- 5 837 964
- US-A1- 2002 104 831
- US-A1- 2003 117 449
- US-B1- 6 441 341

## Description

La présente invention se rapporte au domaine technique de la réalisation de trous dans une pièce en matériau composite à matrice céramique par un procédé de perçage laser. Elle vise aussi les trous obtenus par ce procédé. Elle vise encore une pièce en matériau composite à matrice céramique présentant des trous obtenus par ce procédé, telle que par exemple une aube de turbine ou une paroi de chambre de combustion. Elle vise enfin un turboréacteur comportant une telle pièce.

Il est connu d'utiliser des techniques de perçage laser pour réaliser des trous dans des pièces, et notamment pour percer des trous de refroidissement dans des pièces destinées aux parties chaudes d'un turboréacteur, telles que des aubes de turbine ou telles que des parois ou des viroles d'appui de chambre de combustion.

De manière connue en soi, les techniques de perçage laser mettent en oeuvre deux types d'opérations, qui sont la percussion et la trépanation.

Une opération de percussion consiste à utiliser un faisceau laser fixe de manière pulsée pour pénétrer dans l'épaisseur du matériau. Il en résulte un trou dont le diamètre est déterminé par le diamètre du faisceau laser et par le niveau de puissance de la source laser.

Une opération de trépanation consiste à découper le contour d'un trou en déplaçant le faisceau laser sur une trajectoire circulaire. Il en résulte un trou dont le diamètre est supérieur au diamètre du faisceau laser.

Il est également connu de combiner des deux types d'opération, en commençant le perçage par une opération de percussion, afin de réaliser un premier trou d'un diamètre sensiblement égal à celui du faisceau laser utilisé, puis d'effectuer une opération de trépanation autour de ce premier trou et d'augmenter la section de matériau percé afin de réaliser un deuxième trou d'un diamètre supérieur à celui du faisceau laser utilisé.

L'homme du métier est confronté à un problème technique lorsqu'il réalise un trou en mettant en oeuvre une opération de trépanation, car le trou obtenu présente généralement des scories sur les parois du trou et/ou à la sortie du trou. La présence de telles scories présente l'inconvénient que la géométrie du trou n'est pas garantie. En d'autres termes, il n'est pas possible d'assurer de manière fiable la répétabilité du diamètre des trous obtenus par cette opération de trépanation. Par suite, il n'est pas possible de garantir de manière fiable un débit d'air passant à travers les trous obtenus de cette façon, ce qui est préjudiciable lorsque les trous sont des trous de refroidissement d'une pièce.

Le document US 5 837 964selon le préambule de la revendication 1 décrit un procédé de perçage laser dans une pièce en superalliage, qui met en oeuvre une opération de percussion et une opération de trépanation. En cas de présence de scories dans les trous obtenus lors de l'opération de trépanation, il est proposé de renouveler l'opération de percussion puis l'opération de trépanation, un nombre de fois suffisant, jusqu'à obtenir un trou ayant le diamètre prédéterminé et qui s'étende de manière uniforme dans l'épaisseur de perçage du superalliage.

Depuis quelques années on tend à réaliser des pièces en matériaux composites à matrice céramique (CMC) plutôt qu'en alliages métalliques réfractaires. Les CMC présentent l'avantage d'être plus légers que les matériaux métalliques. Les CMC sont des matériaux thermo-structuraux, c'est-à-dire qu'ils ont de bonnes propriétés mécaniques et la capacité de conserver ces propriétés mécaniques à température élevée. Ces matériaux comportent un renfort fibreux formé de fibres réfractaires (généralement en carbone ou céramique) et densifié par une matrice céramique ou par une matrice mixte carbone/céramique.

Lorsque les CMC sont utilisés pour réaliser des pièces destinées aux parties chaudes des turboréacteurs, il est nécessaire de réaliser des trous pour le passage d'air de refroidissement, de la même manière que dans les pièces réalisées en alliage métallique réfractaire.

Lorsqu'il est appliqué aux CMC, le perçage laser présente l'inconvénient de mettre à nu des structures internes de ces matériaux. Le risque existe alors que l'oxygène ambiant atteigne cette structure interne et qu'il se crée une oxydation de surface du CMC. Cet inconvénient a été surmonté en utilisant des CMC dits « autocicatrisants », c'est-à-dire capables de passer à la température d'utilisation du matériau dans un état visqueux suffisamment fluide pour bloquer l'oxygène ambiant. Il se crée une couche de protection, telle que par exemple en SiC/Si-B-C.

Le procédé de perçage laser qui est mis en oeuvre dans le document US 5 837 964 ne pourrait pas être utilisé pour le perçage de CMC, même s'il s'agit d'un CMC autocicatrisant. En effet, la répétition des opérations de percussion et de trépanation provoquerait un échauffement important du CMC et causer sa dégradation par délamination.

Le document US 6 441 341 décrit un procédé de perçage de trous dans des pièces destinées aux sections chaudes de turboréacteurs réalisées en CMC, le CMC ayant au moins un composant oxydable. Le procédé consiste à réaliser ces trous par perçage laser, tout en chauffant le matériau constitutif de la matrice, afin de l'oxyder et de former une silice. Cette silice est soumise à des températures appropriées qui l'échauffent et la font fondre. Puis elle est rapidement solidifiée avant de s'écouler à l'intérieur des trous. Cette solidification rapide et contrôlée de la silice permet d'obtenir des trous dont la paroi est lisse, dépourvue de scories, et de créer une barrière d'oxydation pour empêcher toute oxydation future en cours de fonctionnement du turboréacteur. Ce procédé de perçage laser présente l'avantage de ne pas créer de scories, mais présente l'inconvénient d'être limité aux CMC ayant au moins un composant oxydable.

Le document EP 0 826 457 décrit un procédé de perçage laser d'une aube de turbine ayant un substrat en superalliage, une couche de liaison et une barrière thermique sous la forme d'un revêtement en céramique. Un premier trou est percé en mode percussion en focalisant le faisceau laser sur la surface de la pièce. Le faisceau laser est ensuite refocalisé en étant éloigné de la pièce, afin de percer un deuxième trou en mode percussion pulsé, ce deuxième trou étant coaxial au premier trou et de plus grand diamètre que ce dernier, et de moindre profondeur. La présence du premier trou de plus petit diamètre permet d'évacuer les matières fondues lors du perçage du deuxième trou. Le procédé décrit dans ce document n'est pas adapté au perçage d'une pièce entièrement réalisée en CMC.

Le document US 2002/0104831 concerne un procédé dans lequel un premier faisceau laser est utilisé pour former un trou qui est nettoyé avec un second faisceau laser.

La présente invention a pour but de remédier aux inconvénients mentionnés ci-dessus. Elle propose un procédé de perçage laser de trous dans des pièces en CMC (matériau composite à matrice céramique) destinées notamment aux parties chaudes d'un turboréacteur, le procédé comportant une opération de percussion, une opération de trépanation et une opération permettant d'éliminer les scories qui ont été créées lors de cette opération de trépanation.

L'invention se rapporte à un procédé de perçage de trous dans une pièce en composite à matrice céramique au moyen d'un faisceau laser, qui comporte :
- une première opération de percussion au cours de laquelle on perce un trou initial ayant un diamètre initial et un axe de trou, en focalisant le faisceau laser dans l'épaisseur de la pièce à percer,
- une deuxième opération de trépanation au cours de laquelle on perce un trou intermédiaire, coaxial au trou initial et ayant un diamètre supérieur à celui du trou initial, en décalant le faisceau laser puis en le faisant tourner autour de l'axe de trou, et
- une troisième opération au cours de laquelle on déplace le point focal du faisceau laser le long de l'axe de trou puis on déclenche des impulsions, pour obtenir un trou final.

Selon une forme de réalisation, on déplace le point focal du faisceau laser en l'éloignant de la position qu'il occupe lors des première et deuxième opérations.

Selon une autre forme de réalisation, on déplace le point focal du faisceau laser en le rapprochant de la position qu'il occupe lors des première et deuxième opérations.

On appelle « défocalisation » l'action de déplacer le point focal du faisceau laser le long de l'axe du trou.

L'effet technique obtenu par ces impulsions du faisceau laser est que les scories qui ont pu être créées lors de l'opération de trépanation sont éliminées par ces impulsions provenant du faisceau laser défocalisé dans l'axe de trou au cours de la troisième opération.

Selon une forme de réalisation, le trou est orienté le long d'un axe perpendiculaire à la surface de ladite pièce. Selon une autre forme de réalisation, le trou est orienté le long d'un axe incliné par rapport à la surface de ladite pièce.

Selon un exemple de réalisation, une pièce en CMC, comportant au moins un trou obtenu par le procédé selon l'invention. Selon un exemple de réalisation, cette pièce est une paroi de chambre de combustion. Selon une autre forme de réalisation, cette pièce est une aube de turbine.

Selon un exemple de réalisation, le procédé est appliqué à un turboréacteur, comportant au moins une pièce selon le troisième aspect.

Un avantage du procédé selon l'invention réside dans le fait qu'il peut être appliqué à des CMC ne possédant pas de composant oxydable.

Un autre avantage du procédé selon l'invention réside dans le fait que les quelques impulsions défocalisées n'ont pas pour effet de dégrader le CMC par délamination ou autre effet dû à la chaleur.

L'invention sera mieux comprise à la lecture de la description détaillée qui va suivre d'un mode de réalisation particulier, fourni à titre indicatif et nullement limitatif, et illustré au moyen des dessins annexés, dans lesquels :
- la figure 1 illustre, de manière schématique, la première opération du procédé et un trou initial ainsi obtenu ;
- la figure 2 illustre, de manière schématique, une étape de la deuxième opération du procédé et un premier trou intermédiaire ;
- la figure 3 illustre, de manière schématique, une autre étape de la deuxième opération du procédé et un deuxième trou intermédiaire ;
- la figure 4 illustre, de manière schématique, un troisième trou intermédiaire obtenu à l'issue de la deuxième opération du procédé ;
- la figure 5 illustre, de manière schématique, un trou final obtenu à l'issue de la troisième opération du procédé ; et
- la figure 6 représente, en perspective schématique les orientations possibles de trous obtenus par le procédé.

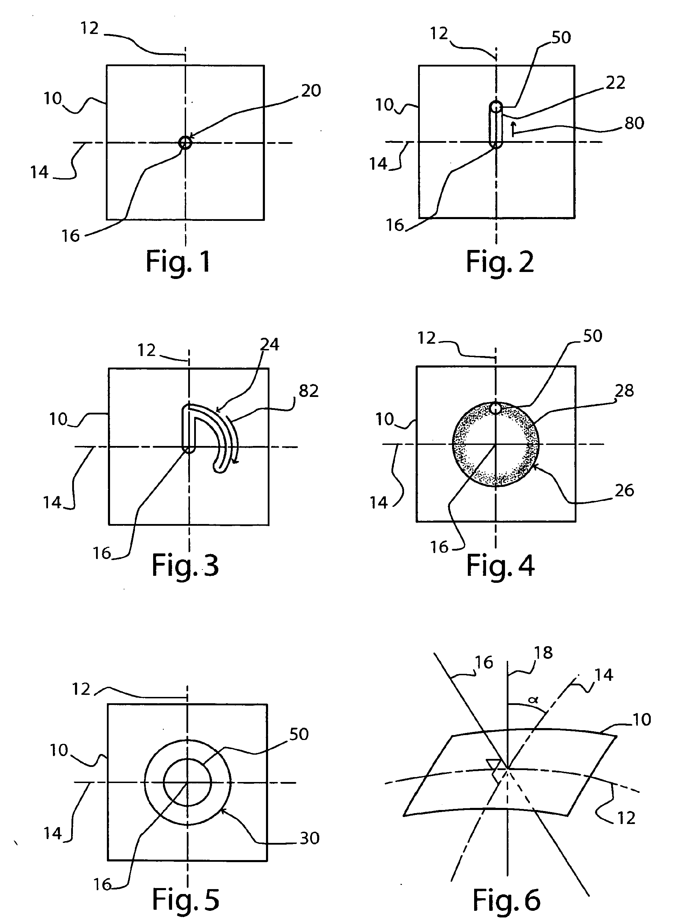

Toutes les figures représentent une portion 10 de la surface d'une pièce en CMC, ainsi que deux axes perpendiculaires 12, 14 du plan de cette portion 10. Le procédé selon l'invention a pour objet le perçage d'un trou final centré sur un axe 16 perpendiculaire aux deux axes 12 et 14. Les éléments 10, 12, 14, 16 sont communs aux figures 1 à 5.

Le procédé selon l'invention met en oeuvre un système laser classique, doté d'une source laser qui émet un faisceau laser.

En se référant tout d'abord à la figure 1, il est représenté un trou initial 20 obtenu par une opération de percussion réalisée à l'aide d'un faisceau laser. Le faisceau laser est focalisé dans l'épaisseur de la pièce à percer, de sorte que le diamètre de ce trou initial 20 est sensiblement égal au diamètre du faisceau laser. Le trou initial 20 est centré sur l'axe 16.

En se référant à la figure 2, il est représenté un premier trou intermédiaire 22 obtenu après une première étape d'une opération de trépanation réalisée à l'aide du faisceau laser. Le faisceau laser a été déplacé dans un plan sensiblement perpendiculaire au plan du trou, suivant une trajectoire rectiligne représentée par la flèche 80 à la figure 2. Le faisceau laser se trouve alors à la position identifiée par le repère 50. Le premier trou intermédiaire 22 est un trou oblong, dont la longueur est sensiblement à la distance de déplacement du faisceau laser, et dont la largeur est sensiblement égale au diamètre du faisceau laser.

En se référant à la figure 3, il est représenté un deuxième trou intermédiaire 24 obtenu au cours d'une deuxième étape d'une opération de trépanation réalisée à l'aide du faisceau laser. Le faisceau laser a été déplacé dans le même plan que précédemment, suivant une trajectoire circulaire représentée par la flèche 82 à la figure 3. A cette étape, la trajectoire parcourue correspond à une portion de cercle.

En se référant à la figure 4, il est représenté un troisième trou intermédiaire 26 obtenu à l'issue de l'opération de trépanation réalisée à l'aide du faisceau laser. Le faisceau laser a continué à être déplacé suivant la trajectoire circulaire représentée par la flèche 82 à la figure 3, jusqu'à avoir parcouru un cercle complet. Le faisceau laser a retrouvé la position identifiée par le repère 50. Le troisième trou intermédiaire 26 a un diamètre sensiblement égal au diamètre de la trajectoire circulaire parcourue par le faisceau laser. En pratique, on règle la longueur de la trajectoire rectiligne 80 illustrée à la figure 2, afin d'obtenir un troisième trou intermédiaire 26 ayant le diamètre souhaité.

On observe cependant que des scories 28 sont collées sur les parois et/ou à la sortie du trou 26 ainsi obtenu. Elles sont inhérentes à l'opération de trépanation. Elles perturbent la régularité du diamètre du trou 26, au point que le débit d'air passant à travers ce trou 26 ne peut pas être connu de manière précise. Dans certaines applications, il est souhaité que le débit d'air passant à travers les trous soit connu précisément, et soit reproductible d'un trou à l'autre. C'est pourquoi il s'avère nécessaire de supprimer ces scories, afin d'obtenir des trous finaux dont le diamètre est contrôlé, ce qui permet que la section efficace unitaire d'un ensemble de trous voisins soit homogène, et que l'ensemble des trous percés ait une perméabilité homogène.

La troisième opération du procédé selon l'invention a pour effet de supprimer la présence des scories 28. Elle est illustrée à la figure 5.

Au cours de cette troisième opération, on effectue une première étape au cours de laquelle on ramène le faisceau laser à sa position initiale, c'est-à-dire à la position identifiée par le repère 50 à la figure 1. Cette position est centrée sur l'axe 16.

Au cours de la troisième opération, on effectue une deuxième étape au cours de laquelle on déplace le point focal du faisceau laser le long de l'axe du trou, c'est-à-dire le long de l'axe 16. Selon une forme de réalisation préférée, on éloigne légèrement le point focal de la portion de surface 10. Selon une autre forme de réalisation, on rapproche légèrement le point focal de la portion de surface 10. Ce déplacement du point focal a pour effet de modifier légèrement le diamètre du faisceau laser au niveau de la portion de surface 10, plus précisément de l'agrandir légèrement. Après le déplacement du point focal le long de l'axe 16, la position du faisceau laser est identifiée par le repère 50 à la figure 5.

Au cours de la troisième opération, on réalise une troisième étape au cours de laquelle on déclenche quelques impulsions laser, de préférence une à cinq impulsions. Cette troisième étape a pour effet de détruire les scories 28 présentes à l'intérieur du troisième trou intermédiaire 26, et d'obtenir un trou final 30, dont les parois sont propres. Comme on le voir à la figure 5, le diamètre du trou final 30 est régulier et contrôlé. Il est aussi constant le long de l'épaisseur de la pièce percée.

Pour mettre en oeuvre la troisième opération du procédé, il n'est pas nécessaire que l'énergie du faisceau laser soit supérieure à celle qui a été mise en oeuvre au cours de la première opération et de la deuxième opération précédentes, car le perçage proprement dit ayant déjà eu lieu, il suffit de disposer d'une énergie apte à nettoyer le troisième trou intermédiaire 26 de ses scories 28.

En référence aux figures 1 à 4, il vient d'être décrit un procédé permettant de réaliser des trous finaux 30 ayant un axe de trou 16 qui est perpendiculaire à la portion de surface 10 d'une pièce dans laquelle est percée le trou 30. Le procédé est également applicable à la réalisation de trous 30 ayant un axe de trou 18 qui n'est pas perpendiculaire à la portion de surface 10, mais qui est incliné d'un angle α par rapport à cette portion de surface 10, comme illustré à la figure 6. Pour mettre en oeuvre le procédé de l'invention, on installe le système laser de sorte que le faisceau laser ne soit pas dirigé suivant la direction 16, mais suivant la direction 18, cette direction 18 ayant l'inclinaison souhaitée par rapport à la portion de surface 10. Selon les applications souhaitées, l'angle α est compris entre 20° et 40°, par exemple sensiblement égal à 30°.

Le procédé qui vient d'être décrit en référence aux figures 1 à 6 est particulièrement utile lorsque l'on souhaite percer des trous ayant un diamètre supérieur au diamètre du faisceau laser dont on dispose. Par exemple, la mise en oeuvre de ce procédé permet de réaliser des trous finaux d'un diamètre de 0,8 mm ou de 0,9 mm, ou de 1,0 mm, en utilisant un faisceau laser ayant un diamètre primaire de 0,7 mm.

Les paramètres d'un exemple de mise en oeuvre, avec un appareil du type LASER SLAB YAG 1064 nm de marque MLS P1000, commercialisé par la société Munich Laser System, sont les suivants :
- diamètre du faisceau laser : 0,5 mm
   Première opération : percussion
      - durée des impulsions : 2 ms
      - fréquence des impulsions : 12 Hz
      - puissance des impulsions : 17 J
      - nombre d'impulsions : 5
   Deuxième opération :
      - déplacement rectiligne : 0,8 mm
      - durée des impulsions : 1,5 ms
      - fréquence des impulsions : 14,8 Hz
      - puissance des impulsions : 14 J
      - vitesse de découpe : 15 mm/mn
   Troisième opération :
      - éloignement du point focal : 3 mm
      - durée des impulsions : 2 ms
      - fréquence des impulsions : 12 Hz
      - puissance des impulsions : 17 J
      - nombre d'impulsions : 5

## Revendications

1. Procédé de perçage de trous (30) dans une pièce au moyen d'un faisceau laser, qui comporte :
- une première opération de percussion au cours de laquelle on perce un trou initial (20) ayant un diamètre initial et un axe de trou (16, 18), en focalisant le faisceau laser dans l'épaisseur de la pièce à percer,
- une deuxième opération de trépanation au cours de laquelle on perce un trou intermédiaire (26), coaxial au trou initial (20) et ayant un diamètre supérieur à celui du trou initial (20), en décalant le faisceau laser puis en le faisant tourner autour de l'axe de trou (16, 18),
procédé **caractérisé par le fait que**
- la pièce est en composite à matrice céramique et
- le procédé comporte une troisième opération au cours de laquelle on déplace le point focal du faisceau laser le long de l'axe de trou (16, 18) puis on déclenche des impulsions, pour obtenir un trou final (30).

2. Procédé selon la revendication 1, **caractérisé en ce que** le nombre d'impulsions est compris entre 1 et 5.

3. Procédé selon la revendication 1 ou 2, **caractérisé en ce qu'**on déplace le point focal du faisceau laser en l'éloignant de la position qu'il occupe lors des première et deuxième opérations.

4. Procédé selon la revendication 1 ou 2, **caractérisé en ce qu'**on déplace le point focal du faisceau laser en le rapprochant de la position qu'il occupe lors des première et deuxième opérations.

5. Procédé selon l'une des revendications 1 à 4, **caractérisé en ce que** le trou est orienté le long d'un axe (16) perpendiculaire à la surface (10) de ladite pièce.

6. Procédé selon l'une des revendications 1 à 4, **caractérisé en ce que** le trou est orienté le long d'un axe (18) incliné par rapport à la surface (10) de ladite pièce.

7. Procédé selon la revendication 6, **caractérisé en ce que** le trou est incliné d'un angle (α) compris entre 20° et 40° par rapport à la surface (10) de ladite pièce.

8. Procédé selon la revendication 7, **caractérisé en ce que** le trou est incliné d'un angle (α) sensiblement égal à 30 ° par rapport à la surface (10) de ladite pièce.

9. Procédé selon l'une des revendications 1 à 8, appliqué à une pièce en CMC d'un turboréacteur, par exemple une paroi de chambre de combustion ou une aube de turbine.

## Claims

1. A method of drilling holes (30) in a component by means of a laser beam, wherein it comprises:
- a percussion first operation during which an initial hole (20) having an initial diameter and a hole axis (16,18) is drilled by focusing the laser beam in the thickness of the component to be drilled;
- a trepanning second operation during which an intermediate hole (26), coaxial with the initial hole (20) and having a larger diameter than that of the initial hole (20) is drilled by shifting the laser beam and then making it rotate about the hole axis (16, 18); method **characterized in that** :
the component is made of a ceramic matrix composite and the method comprises a third operation during which the focal point of the laser beam is moved along the hole axis (16,18) and then pulses are triggered, to obtain a final hole (30).

2. The method as claimed in claim 1, wherein the number of pulses is between 1 and 5.

3. The method as claimed in claim 1 or 2, wherein the focal point of the laser beam is moved, by moving it away from the position that it occupies during the first and second operations.

4. The method as claimed in claim 1 or 2, wherein the focal point of the laser beam is moved by bringing it closer to the position that it occupies during the first and second operations.

5. The method as claimed in one of claims 1 to 4, wherein the hole is oriented along an axis (16) perpendicular to the surface (10) of said component.

6. The method as claimed in one of claims 1 to 4, wherein the hole is oriented along an axis (18) inclined to the surface (10) of said component.

7. The method as claimed in claim 6, wherein the hole is inclined at an angle (α) of between 20° and 40° to the surface (10) of said component.

8. The method as claimed in claim 7, wherein the hole is inclined by an angle (α) of approximately 30° to the surface (10) of said component.

9. The method as claimed in one of claims 1 to 8, applied to a CMC component of a turbojet, for example a combustion chamber wall or a turbine blade.

## Patentansprüche

1. Verfahren zum Bohren von Löchern (30) in einem Werkstück mittels eines Laserstrahls, umfassend:
- einen ersten Arbeitsgang des Aufschlagens, bei dem ein Anfangsloch (20) gebohrt wird, das einen Anfangsdurchmesser und eine Lochachse (16, 18) aufweist, wobei der Laserstrahl auf die Dicke des zu bohrenden Werkstücks gebündelt wird,
- einen zweiten Arbeitsgang des Aufbohrens, bei dem ein Zwischenloch (26) gebohrt wird, das zu dem Anfangsloch (20) koaxial ist und einen Durchmesser aufweist, der größer ist als der des Anfangslochs (20), wobei der Laserstrahl verlagert und dann um die Lochachse (16, 18) herum gedreht wird,
wobei das Verfahren **dadurch gekennzeichnet ist, dass**
- das Werkstück aus einem Verbundwerkstoff mit Keramikmatrix (CMC) besteht, und
- das Verfahren einen dritten Arbeitsgang umfasst, bei dem der Brennpunkt des Laserstrahls an der Lochachse (16, 18) entlang verschoben wird und dann Impulse ausgelöst werden, um ein endgültiges Loch (30) zu erzielen.

2. Verfahren nach Anspruch 1, **dadurch gekennzeichnet, dass** die Anzahl der Impulse zwischen 1 und 5 liegt.

3. Verfahren nach Anspruch 1 oder 2, **dadurch gekennzeichnet, dass** der Brennpunkt des Laserstrahls verschoben wird, indem er von der Position entfernt wird, die er während der ersten und zweiten Arbeitsgänge einnimmt.

4. Verfahren nach Anspruch 1 oder 2, **dadurch gekennzeichnet, dass** der Brennpunkt des Laserstrahls verschoben wird, indem er der Position genähert wird, die er während der ersten und zweiten Arbeitsgänge einnimmt.

5. Verfahren nach einem der Ansprüche 1 bis 4, **dadurch gekennzeichnet, dass** das Loch an einer Achse (16) entlang orientiert ist, die zur Oberfläche (10) des Werkstücks rechtwinklig ist.

6. Verfahren nach einem der Ansprüche 1 bis 4, **dadurch gekennzeichnet, dass** das Loch an einer Achse (18) entlang orientiert ist, die im Verhältnis zur Oberfläche (10) des Werkstücks geneigt ist.

7. Verfahren nach Anspruch 6, **dadurch gekennzeichnet, dass** das Loch um einen Winkel (α) geneigt ist, der zwischen 20° und 40° im Verhältnis zur Oberfläche (10) des Werkstücks liegt.

8. Verfahren nach Anspruch 7, **dadurch gekennzeichnet, dass** das Loch um einen Winkel (α) geneigt ist, der im Wesentlichen gleich 30° im Verhältnis zur Oberfläche (10) des Werkstücks ist.

9. Verfahren nach einem der Ansprüche 1 bis 8, angewandt auf ein CMC-Werkstück eines Turboluftstrahltriebwerks, z.B. eine Brennkammerwand oder eine Turbinenschaufel.
